# EUROPEAN PATENT APPLICATION

(11) **EP 4 678 327 A1**
(43) Date of publication of application: **14.01.2026**
(21) Application number: 24845181.7
(22) Date of filing: 27.05.2024
(51) Int. Cl.: B23K 20/12

(54) **FRICTION STIR WELDING METHOD, FRICTION STIR WELDING DEVICE, AND METHOD FOR MANUFACTURING JOINT MEMBER**

(30) Priority: 25.07.2023 JP 2023121099
(71) Applicant: JFE Steel Corporation, Tokyo 100-0011 (JP)
(72) Inventor: TANIGUCHI Koichi, Tokyo 100-0011 (JP); TOMITA Kai, Tokyo 100-0011 (JP)
(74) Representative: Haseltine Lake Kempner LLP
(86) International application number: PCT/JP2024/019447
(87) International publication number: WO 2025/022799

(57) **Abstract**

A friction stir welding method is provided that makes it possible to prevent roller scratch occurrence and obtain excellent joint efficiency even when high-Si steel sheets are used as material to be joined. The method includes a joining process, a surface working process, and a heating process, and a maximum thickness reduction of a joined member in the surface working process is 5.0 % or less of a thickness of the material to be joined, and further, a maximum arrival temperature in the heating process is 400 °C or higher and 1000 °C or lower.

## Description

### TECHNICAL FIELD

The present disclosure relates to a friction stir welding method, a friction stir welding device, and a method of producing a joined member.

### BACKGROUND

In friction stir welding such as double-sided friction stir welding, material to be joined is joined as follows. A pair of rotating tools are disposed at the front side and back side of material to be joined consisting of at least two or more metal sheets. The rotating tools are then pressed against the front surface and the back surface of the material to be joined, and are moved in a joining direction while being rotated. This allows the metal sheets to be softened by the frictional heat between the rotating tools and the material to be joined, and the softened portion is then stirred by the rotating tools. Plastic flow is caused in the region of a join portion of the material to be joined, thereby joining the material to be joined. Hereinafter, a region where the material to be joined is butted or overlapped and not yet joined is referred to as an "unjoined portion", and a region that has been joined and integrated is referred to as a "joined portion".

As a technique related to such friction stir welding, for example, Patent Literature (PTL) 1 describes:
"a friction stir welding method comprising, in friction stir welding where two steel sheets are butted or lapped: setting a rotational speed R of a tool rotating in the friction stir welding to more than 5 rpm and less than 5000 rpm; setting a leading edge temperature T of the steel sheets contacting a leading edge in an advancing direction of the tool to 25 °C or higher; setting a shoulder diameter D of the tool to 8 mm to 40 mm; and setting a welding speed V associated with the advancing of the tool to 0.1 m/min to 5 m/min".

### CITATION LIST

### Patent Literature

PTL 1: JP 2019-166569 A

### SUMMARY

### (Technical Problem)

In steel sheet production lines, such as pickling, cold rolling, annealing, and coating or plating production lines, in order to improve productivity and increase yield rate, performing so-called coil joining then passing steel sheets (steel strips) through the production line is common. Here, coil joining, when a preceding steel sheet or steel strip (hereinafter also referred to as a preceding steel sheet) and a steel sheet or steel strip following the preceding steel sheet (hereinafter also referred to as a trailing steel sheet) are material to be joined in a production line, means joining an end (trailing end) of the preceding steel sheet to an end (leading end) of the trailing steel sheet.

Resistance seam welding or laser welding is typically used for coil joining. In recent years, application of friction stir welding to coil joining has also been considered. However, when coil joining is carried out by friction stir welding on steel sheets such as electrical steel sheets having a Si content of 2.0 mass% to 12.0 mass% (hereinafter also referred to as high-Si steel sheets), line defects may occur. Specifically, scratches may occur on rollers that pass the steel sheets downstream of the joining process (hereinafter also simply referred to as roller scratch occurrence or occurrence of roller scratching). Therefore, there is currently a demand for improvement in this regard.

The present disclosure has been developed in view of the circumstances described above, and it would be helpful to provide a friction stir welding method that can help prevent roller scratch occurrence and obtain excellent joint efficiency even when high-Si steel sheets are used as material to be joined. Further, it would be helpful to provide a friction stir welding device that can be suitably used in the friction stir welding method. Further, it would be helpful to provide a method of producing a joined member. Hereinafter, any numerical range expressed using "to" means a range that includes the numerical values before and after "to" as the lower limit value and the upper limit value, respectively.

### (Solution to Problem)

The inventors conducted intensive studies to solve the technical problem outlined above. First, the inventors investigated causes of occurrence of roller scratching when high-Si steel sheets are used as material to be joined. As a result, the inventors have found that roller scratch occurrence is due to burrs that are generated at a joined portion during friction stir welding. In particular, when high-Si steel sheets are used as material to be joined, hardness of burrs at the joined portion increases, and even when only a small amount of burrs remain, this can lead to roller scratch occurrence.

Based on the above discovery, the inventors attempted to prevent roller scratch occurrence by removing burrs at the joined portion by grinding or the like. However, in this case, the joint efficiency was significantly decreased.

Therefore, the inventors have conducted intensive research into the above-mentioned cause and have conducted further research in order to achieve a desired solution. As a result, the inventors made the following discoveries.
(1) In a process of removing burrs, a deformed microstructure is formed at the joined portion. In particular, when a hardened phase, that is, a microstructure with decreased ductility compared to the base metal, exists in a region from a surface to 1/10 of the thickness at the joined portion of the joined member (hereinafter also referred to as a surface layer region of the joined portion), defects will occur in that microstructure. Cracks will then occur with the defects as initiation points, decreasing the joint efficiency.
(2) In order to prevent roller scratch occurrence and obtain excellent joint efficiency, it is important to simultaneously satisfy the following points.
   - In a surface working process, which is a process of removing burrs, a maximum thickness reduction of the joined member is limited to 5.0 % or less of the thickness of the material to be joined.
   - After the surface working process, the joined member is heated, and heating conditions are appropriately controlled to decrease deformation strain in the surface layer region of the joined portion.

The present disclosure is based on these discoveries and further studies.

Primary features of the present disclosure are as follows.
1. A friction stir welding method comprising:
   a joining process of pressing a rotating tool against material to be joined and joining the material to be joined by moving the rotating tool in a joining direction while rotating the rotating tool, thereby obtaining a joined member;
   a subsequent surface working process of carrying out surface working on the joined member; and
   a subsequent heating process of heating the joined member, wherein
   the material to be joined is steel sheets having a Si content of 2.0 mass% to 12.0 mass%,
   a maximum thickness reduction of the joined member in the surface working process is 5.0 % or less of the thickness of the material to be joined, and
   a maximum arrival temperature in the heating process is 400 °C or higher and 1000 °C or lower.
2. The friction stir welding method according to 1, above, wherein the surface working is carried out by grinding or pressing.
3. The friction stir welding method according to 1 or 2, above, wherein the heating is carried out by induction heating or resistance heating.
4. The friction stir welding method according to any one of 1 to 3, above, wherein, after the heating process, a hardness of a surface layer region of the joined portion of the joined member is in a range from 95 % to 115 % of a hardness of a base metal of the joined member, and
   the surface layer region of the joined portion of the joined member is a region from a surface to a 1/10 thickness position of the joined portion of the joined member.
5. The friction stir welding method according to any one of 1 to 4, above, further comprising a preliminary surface working process, prior to the joining process, of removing at least a region up to a depth of 5 µm from a surface of the material to be joined.
6. A friction stir welding device used in the friction stir welding method according to any one of 1 to 4, above, the friction stir welding device comprising:
   a joining device configured to join material to be joined to obtain a joined member;
   a surface working device configured to carry out surface working on the joined member; and
   a heating device configured to heat the joined member,
   in the above order in a joining direction.
7. A friction stir welding device used in the friction stir welding method according to 5, above, the friction stir welding device comprising:
   a preliminary surface working device configured to carry out preliminary surface working on material to be joined;
   a joining device configured to join the material to be joined to obtain a joined member;
   a surface working device configured to carry out surface working on the joined member; and
   a heating device configured to heat the joined member,
   in the above order in a joining direction.
8. A method of producing a joined member, the method comprising joining material to be joined by the friction stir welding method according to any one of 1 to 5, above, to obtain the joined member.

### (Advantageous Effect)

According to the present disclosure, even when high-Si steel sheets are used as material to be joined, it is possible to prevent roller scratch occurrence and obtain excellent joint efficiency.

### BRIEF DESCRIPTION OF THE DRAWINGS

In the accompanying drawings:
FIG. 1 is a schematic diagram illustrating an example of a friction stir welding method according to an embodiment of the present disclosure; and
FIG. 2 is a schematic diagram illustrating an example of double-sided friction stir welding.

### DETAILED DESCRIPTION

The following describes embodiments of the present disclosure.

### Friction stir welding method

[1] First, a friction stir welding method according to an embodiment of the present disclosure is described.

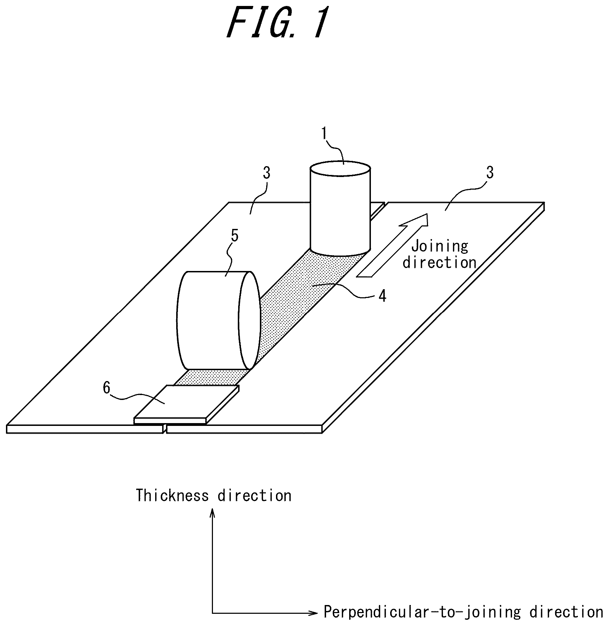

As illustrated in FIG. 1, a friction stir welding method according to an embodiment of the present disclosure includes the following:
a joining process of pressing a rotating tool against material to be joined and joining the material to be joined by moving the rotating tool in a joining direction while rotating the rotating tool, thereby obtaining a joined member;
a subsequent surface working process of carrying out surface working on the joined member; and
a subsequent heating process of heating the joined member.

In FIG. 1, reference sign 1 denotes a rotating tool (front-side rotating tool), 3 denotes material to be joined, 4 denotes a joined portion, 5 denotes a grinding device, and 6 denotes a heating device. Each of the above processes is explained below.

### (Joining process)

In the joining process, the rotating tool is pressed against the material to be joined and moved in the joining direction while being rotated, thereby joining the material to be joined and obtaining a joined member.

Joining conditions are not particularly limited, and a conventional method may be followed.

The joining method may be single-sided friction stir welding, in which a rotating tool is disposed on one side of the material to be joined, or double-sided friction stir welding, in which a rotating tool is disposed on both the front and back sides of the material to be joined.

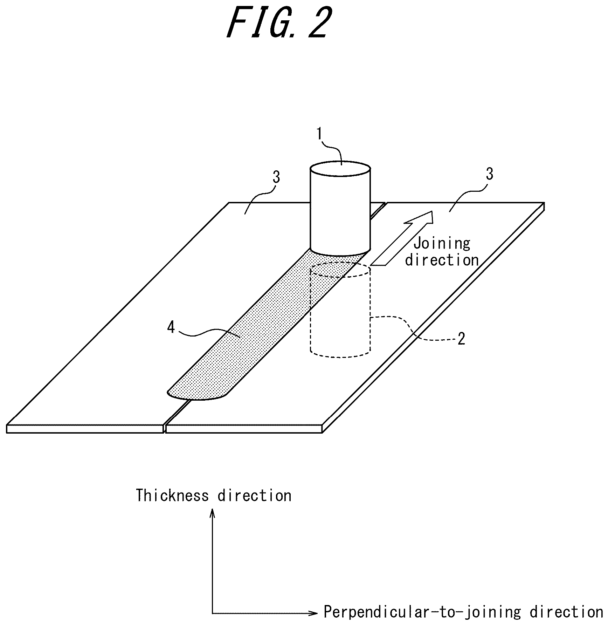

To explain an example of double-sided friction stir welding, as illustrated in FIG. 2, a pair of rotating tools are disposed on the front side and the back side of material to be joined including at least two metal sheets. Hereinafter, a rotating tool disposed on the front side of the material to be joined is referred to as a front-side rotating tool. Further, a rotating tool disposed on the back side of the material to be joined is referred to as a back-side rotating tool. In FIG. 2, reference sign 1 denotes a rotating tool (front-side rotating tool), 2 denotes a rotating tool (back-side rotating tool), 3 denotes material to be joined, and 4 denotes a joined portion. The pair of opposing rotating tools are then pressed against the front surface and the back surface of the material to be joined, and are moved in a joining direction while being rotated. That is, the front-side rotating tool is pressed against the front surface of the material to be joined, and the back-side rotating tool is pressed against the back surface of the material to be joined, and these rotating tools are moved in the joining direction while being rotated. This allows the metal sheets to be softened by the frictional heat between the rotating tools and the material to be joined, and the softened portion is then stirred by the rotating tools. Plastic flow is caused in the region of a join portion of the material to be joined, thereby joining the material to be joined.

Further, examples of joining methods include butt joining and lap joining. In butt joining, end faces of the material to be joined are disposed opposite each other, and a rotating tool is pressed against a butted portion that includes the end faces (butting faces) of the material to be joined while being rotated. In this state, the rotating tool is moved in the joining direction to join the material to be joined. In lap joining, at least a portion of end portions of the material to be joined is overlapped, and a rotating tool is pressed against the overlapped portion while being rotated. In this state, the rotating tool is moved in the joining direction to join the material to be joined.

### (Surface working process)

In the surface working process, burrs on the surface of the joined member generated in the joining process are removed. In FIG. 1, the back side of the device is not illustrated. At this time, it is important to suppress the amount of the joined member removed together with the burrs, and in particular to keep a maximum thickness reduction of the joined member to 5.0 % or less of the thickness of the material to be joined.

Maximum thickness reduction of joined member: 5.0 % or less of thickness of material to be joined

When friction stir welding is carried out using high-Si steel sheets as the material to be joined, and then burrs formed at the joined portion are removed, a microstructure having decreased ductility compared to the base metal is formed in the surface layer region of the joined portion, and defects occur in this microstructure. Cracks will then occur with the defects as initiation points, decreasing the joint efficiency. As described above, in order to suppress deformation strain in the region, it is effective to heat the joined member in the heating process described below and to appropriately control the heating conditions. However, when the maximum thickness reduction of the joined member exceeds 5.0 % of the thickness of the material to be joined, that is, when the ratio of the maximum thickness reduction of the joined member to the thickness of the material to be joined (= [maximum thickness reduction of joined member (mm)] / [thickness of material to be joined (mm)] × 100, hereinafter also referred to as a joined member thickness reduction ratio) exceeds 5.0 %, the joint efficiency decreases due to metal loss. Further, even when the joined member is heated after the surface working process, the deformation strain in the region cannot be sufficiently decreased, and excellent joint efficiency cannot be obtained. The joined member thickness reduction ratio is therefore 5.0 % or less. The joined member thickness reduction ratio is preferably 3.0 % or less. As long as burrs generated in the joining process can be removed, the joined member thickness reduction ratio is not particularly limited and may be 0 %. From the viewpoint of sufficiently removing burrs generated in the joining process and more reliably preventing roller scratch occurrence, the joined member thickness reduction ratio is preferably 1.0 % or more.

Here, the joined member maximum thickness reduction is a maximum value of thickness reduction in each region of the joined member that has been subjected to surface working. Further, in the case of butt joining, the thickness of the material to be joined is the thickness of one steel sheet of the material to be joined. However, when the thicknesses of the steel sheets of the material to be joined are different from one another, the thickness of the material to be joined is an average value of the thicknesses of the steel sheets of the material to be joined. Further, in the case of lap joining, it is the thickness of the overlapping portion of the material to be joined (that is, the total thickness of the steel sheets overlapping at the overlapping portion).

The surface working method is not particularly limited. From the viewpoint of processing efficiency, the surface working method is preferably grinding or pressing. In order to control the maximum thickness reduction of the joined member, it is preferable to check the surface condition of the joined member (such as the degree of burrs) before surface working and then adjust the position and height at which the surface working is carried out.

In the joining process, when double-sided friction stir welding is carried out, the surface working is carried out on both sides of the material to be joined. Further, in the joining process, when one-sided friction stir welding is carried out, the surface working may be carried out only on one side of the joined member (the side on which the rotating tool is disposed (the side on which the bead is formed)), or on both sides of the joined member. In terms of efficiency, the former is advantageous. Further, when the surface working is carried out on both sides of the joined member, the joined member thickness reduction ratio on each side is controlled within the above range. In the heating process described below, similarly to the above, heating may be carried out on one side or both sides of the joined member depending on the joining method.

Conditions other than those described above are not particularly limited, and a conventional method may be used.

### (Heating process)

In the heating process, the joined member is heated. As described above, when burrs formed at the joined portion are removed after friction stir welding using high-Si steel sheets as the material to be joined, a microstructure having decreased ductility compared to the base metal is formed in the surface layer region of the joined portion, and defects occur in this microstructure. Cracks will then occur with the defects as initiation points, decreasing the joint efficiency. In order to decrease deformation strain in the surface layer region of the joined portion, it is important to heat the joined member after removing burrs and to control the heating conditions as follows.

### Maximum arrival temperature: 400 °C or higher and 1000 °C or lower

By setting the maximum arrival temperature to 400 °C or higher, the deformation strain in the surface layer region of the joined portion is decreased, and excellent joint efficiency is obtained. However, when the maximum arrival temperature exceeds 1000 °C, crystal grains become coarse. Therefore, the maximum arrival temperature is 400 °C or higher and 1000 °C or lower. The maximum arrival temperature is preferably 700 °C or higher. Further, the maximum arrival temperature is preferably 900 °C or lower.

Further, it is preferable that the heating process satisfies the following conditions. This more advantageously decreases the deformation strain in the surface layer region of the joined portion, and provides excellent joint efficiency.
Average heating rate in a temperature range from 100 °C to 400 °C (hereinafter also referred to as heating rate): 10 °C/s to 300 °C/s
Holding time at maximum arrival temperature (hereinafter also referred to as holding time): 0.1 s to 10 s
Average cooling rate in a temperature range from 400 °C to 100 °C (hereinafter also referred to as cooling rate): 10 °C/s to 300 °C/s

All temperatures mentioned here are based on a surface temperature of the joined portion of the joined member. When one-sided friction stir welding is carried out and the surface working is carried out only on one side of the joined member (the side on which the rotating tool is disposed (the side on which the bead is formed)), the maximum arrival temperature is controlled to be within the above range at least on that side of the joined portion of the joined member. In such a case, it is preferable to control the heating rate, the holding time, and the cooling rate within the above ranges on the surface of the joined portion of the joined member. Further, when double-sided friction stir welding is carried out and the surface working is carried out on both sides of the joined member, the maximum arrival temperature on both sides of the joined portion of the joined member is controlled to be within the above range. In such a case, it is preferable to control the heating rate, the holding time, and the cooling rate within the above ranges on both surfaces of the joined portion of the joined member.

The heating method is not particularly limited. From the viewpoint of heating efficiency, the heating method is preferably high-frequency induction heating or resistance heating (using electrodes to pass electricity through).

Conditions other than those described above are not particularly limited, and a conventional method may be used.

### (Preliminary surface working process)

In friction stir welding, when an oxide coating or contaminants remain on the surface of the material to be joined, this can lead to a decrease in joint strength. To avoid this, the friction stir welding method according to an embodiment of the present disclosure may optionally further include a preliminary surface working process, prior to the joining process, of removing at least a region up to a depth of 5 µm from a surface of the material to be joined. It is preferable that the region of the material to be joined to be removed in the preliminary surface working process is a region up to a depth of 50 µm from the surface of the material to be joined. The preliminary surface working may be carried out on only one side of the material to be joined, or on both sides of the material to be joined, depending on the surface condition of the material to be joined.

The surface working method is not particularly limited. From the viewpoint of working efficiency, the surface working method is preferably grinding or polishing.

When preliminary surface working is carried out, the thickness of the material to be joined, which is the denominator of the joined member thickness reduction ratio, is the thickness of the material to be joined after the preliminary surface working. That is, the thickness of the material to be joined, which is the denominator of the joined member thickness reduction ratio, is the thickness of the material to be joined provided to the joining process.

Conditions other than those described above are not particularly limited, and a conventional method may be used.

### (Material to be joined)

The material to be joined is steel sheets having a Si content of 2.0 mass% to 12.0 mass%. The content of elements other than Si is not particularly limited. Further, the chemical composition of such a steel sheet is, in mass%, C: 0.1 % or less, Si: 2.0 % to 12.0 %, Al: 2.0 % or less, and Mn: 1.0 % or less, with the balance being Fe and inevitable impurity. The inevitable impurity may be, for example, P: 0.2 % or less, S: 0.01 % or less, and N: 0.01 % or less. The chemical composition may optionally contain, in mass%, at least one selected from the group consisting of Cr: 1 % or less, Ni: 1 % or less, Cu: 1 % or less, Sn: 0.2 % or less, Sb: 0.2 % or less, Ca: 0.01 % or less, REM: 0.05 % or less, and Mg: 0.01 % or less. Elements other than Si and Fe may each be 0 mass%. The Si content is preferably 3.0 mass% or more. Further, the Si content is preferably 8.0 mass% or less. The Si content is more preferably 5.0 mass% or less. The C content is more preferably 0.001 mass% or more. The Mn content and the Al content are each more preferably 0.01 mass% or more. Further, the steel sheets used for the material to be joined may be of the same steel grade or different steel grades. Further, the thickness of each steel sheet used for the material to be joined is preferably 0.2 mm to 3.2 mm.

### (Joined member)

A joined member obtained by a friction stir welding method according to an embodiment of the present disclosure includes two or more base metals (material to be joined) and a joined portion of the base metals (the joined portion joining the base metals together). Each base metal is a steel sheet as material to be joined. The joined portion is the region that has undergone hot working due to frictional heat and plastic flow between the rotating tool and the material to be joined, resulting in a recrystallized microstructure. Further, the hardness of the surface layer region of the joined portion of the joined member is preferably in a range from 95 % to 115 % of the hardness of the base metal. The hardness of the surface layer region is more preferably in a range from 100 % to 110 % of the hardness of the base metal. In other words, the conditions of each of the above processes, particularly the conditions of the heating process, are controlled so that the hardness of the surface layer region of the joined portion of the finally obtained joined member is preferably in the range from 95 % to 115 % of the hardness of the base metal, and more preferably in the range from 100 % to 110 % of the hardness of the base metal.

Here, the surface layer region is the region from the surface of the joined portion of the joined member to a position of 1/10 thickness (depth (in the thickness direction) from the surface: region up to 1/10 of the thickness of the joined portion). When one-sided friction stir welding is carried out and the surface working and the heating are carried out only on one side of the joined member (the side on which the rotating tool is disposed (the side on which the bead is formed)), the hardness of the surface layer region of the joined portion on at least that side of the joined portion of the joined member is preferably in the range from 95 % to 115 % of the hardness of the base metal, and more preferably in the range from 100 % to 110 % of the hardness of the base metal. Further, when double-sided friction stir welding is carried out and the surface working and the heating are carried out on both sides of the joined member, the hardness of the surface layer region of the joined portion on both sides of the joined portion of the joined member is preferably in the range from 95 % to 115 % of the hardness of the base metal, and more preferably in the range from 100 % to 110 % of the hardness of the base metal.

The hardness of the surface layer region of the joined portion and the hardness of the base metal are measured by a Vickers hardness test in accordance with JIS Z 2244 (2009). The test force is set to 100 gf.

Specifically, the joined member is cut in the thickness (vertical) direction so that a joint section (a plane that includes the perpendicular-to-joining direction and the thickness direction of the joined member, where the perpendicular-to-joining direction is a direction perpendicular to both the joining direction and the thickness direction) becomes a cross-section. Next, in the surface layer region of the joined portion of the cross-section, the Vickers hardness is measured under the above conditions, starting from a position 50 µm deep from the surface of the joined portion and 50 µm away from one of the boundaries between the base metal and the joined portion in the perpendicular-to-joining direction (towards the joined portion), in a grid pattern at intervals of 50 µm in the thickness direction and 50 µm in the perpendicular-to-joining direction. Further, the Vickers hardness is measured at a central thickness position of the base metal on the cross-section under the above conditions. When the Vickers hardness measured in the surface layer region of the joined portion of the cross-section is in the range from 95 % to 115 % of the Vickers hardness measured at the central thickness position of the base metal of the cross-section, the hardness of the surface layer region of the joined portion is determined to be in the range from 95 % to 115 % of the hardness of the base metal. When the Vickers hardness differs depending on the base metals joined via the joined portion, the above determination is made based on the Vickers hardness of each base metal joined via the joined portion. For example, in a joined member in which a first base metal and a second base metal are joined via a joined portion, when the Vickers hardness measured in the surface layer region of the joined portion of the cross-section is in the range from 95 % to 115 % of the Vickers hardness measured at the central thickness position of the first base metal of the cross-section, and is also in the range from 95 % to 115 % of the Vickers hardness measured at the central thickness position of the second base metal of the cross-section, then the hardness of the surface layer region of the joined portion is determined to be in the range from 95 % to 115 % of the hardness of the base metal.

Further, the base metal and the joined portion may be defined, for example, as follows. The joined member is cut in the thickness (vertical) direction so that a joint section becomes the cross-section. The cross-section is then polished and etched with 3 vol% nital (a solution of nitrate and ethanol), saturated picric acid solution, or aqua regia (a solution of hydrochloric acid and nitrate mixed in a 3:1 volume ratio). Next, the cross-section is observed under an optical microscope, and the base metal and the joined portion are defined based on the degree of etching and the like.

The joined member may be either a one-sided friction stir welded joint or a double-sided friction stir welded joint. Here, a single-sided friction stir welded joint is a joined member in which material to be joined is joined by single-sided friction stir welding, in which a rotating tool is disposed on one side of the material to be joined. That is, a one-sided friction stir welded joint has a bead on only one surface of the joined portion. In a one-sided friction stir welded joint, it is preferable to control the conditions of each of the above processes, particularly the conditions of the heating process, so that the surface layer region is obtainable on at least one surface side of the joined portion. A double-sided friction stir welded joint is a joined member in which material to be joined is joined by double-sided friction stir welding, in which rotating tools are disposed on both the front and back surfaces of the material to be joined. That is, a double-sided friction stir welded joint has beads on both surfaces of the joined portion. When the joined member is a double-sided friction stir welded joint, it is preferable to control the conditions of each of the above processes, particularly the conditions of the heating process, so that the surface layer regions are obtainable in the vicinity of both surfaces of the joined portion.

### [2] Friction stir welding device

The following describes a friction stir welding device according to an embodiment of the present disclosure.

The friction stir welding device according to an embodiment of the present disclosure is a friction stir welding device that can be suitably used in the friction stir welding method of [1], above, and includes:
an optional preliminary surface working device configured to carry out preliminary surface working on the material to be joined;
a joining device configured to join the material to be joined to obtain a joined member;
a surface working device configured to carry out surface working on the joined member; and
a heating device configured to heat the joined member,
in the above order in the joining direction. As required, a surface shape measuring device may be provided between the joining device and the surface working device.

Here, the type of the preliminary surface working device is not particularly limited as long as it can carry out surface working on the material to be joined and partially remove the material to be joined. Examples of the preliminary surface working device include a grinding device such as a grinder, or a polishing device.

The type of the joining device is not particularly limited as long as it is a device that carries out friction stir welding. Examples of the joining device include a rotating tool and a drive device for the rotating tool.

The type of the surface shape measuring device is not particularly limited as long as it can check the degree of burrs on the surface of the joined portion of the joined member. Examples of surface shape measuring devices include contact type (tracing the surface of a sample with a stylus) and noncontact type (laser, etc.) surface shape measuring devices.

The type of the surface working device is not particularly limited as long as it can carry out surface working on the joined member and remove burrs from the surface of the joined portion of the joined member. Examples of the surface working device include a grinding device such as a grinder, or a pressing device.

The type of the heating device is not particularly limited. Examples of heating devices include an atmospheric furnace (where the joined portion is passed through a furnace that covers the entire joined portion and heats it in an atmosphere), and an induction heating device and a resistance heating device that heat locally without contact. The heating device preferably includes a device for measuring a surface temperature of the joined member, such as a thermograph.

Further, the friction stir welding device according to an embodiment of the present disclosure preferably includes a drive device that moves the optional preliminary surface working device, the joining device, the optional surface shape measuring device, the surface working device, and the heating device together in the joining direction in accordance with the joining speed. This allows a series of processes to be carried out continuously, which is extremely advantageous in terms of efficiency.

Other than the above, there are no particular limitations, and the device configuration may be the same as that of a conventionally known device.

### [3] Method of producing joined member

The following describes a method of producing a joined member according to an embodiment of the present disclosure.

The method of producing a joined member according to an embodiment of the present disclosure is to join material to be joined by the friction stir welding method [1] above to obtain a joined member. The obtained joined member is as described under [1], above. A specific example of the obtained joined member is a coil including a joined portion that joins a preceding steel sheet and a trailing steel sheet. Conditions other than those described above are not particularly limited, and a conventional method may be used.

### EXAMPLES

In each case, as material to be joined, two steel sheets, each having a Si content and thickness listed in Table 1, were butted together and subjected to double-sided friction stir welding to obtain a joined member (joining process). In each case, conditions were a rotation speed of 1000 rpm and a joining speed of 2 m/min on both sides. The rotating tools (front-side rotating tool and back-side rotating tool) used were ceramic tools having a shoulder diameter (diameter of the shoulder): 16 mm, a probe diameter (diameter of the probe): 8 mm, and a probe length: 1 mm. Next, both surfaces of the obtained joined member were subjected to surface working by grinding using a grinder having a width of 20 mm under the conditions listed in Table 1 to remove burrs from the joined portion of the bonded member (surface working process). Here, the maximum thickness reduction of the joined member was measured using a laser displacement meter. Next, the joined member was heated under the conditions listed in Table 1 (heating process). Here, the heating was carried out using an atmospheric furnace. Further, the surfaces (both sides) of the joined member were measured by thermography to determine the maximum arrival temperature. Conditions not specified were in accordance with the above descriptions or a conventional method. The surface working process was not carried out for No. 15. The heating process was not carried out for No. 16. In each case, the conditions of the surface working process and the heating process, as well as the hardness of the surface layer region of the joined portion / hardness of the base metal × 100, described later, were approximately the same on both sides, and therefore Table 1 lists only one side as representative. In addition, the ability to prevent roller scratch occurrence, described later, was checked on both sides of the joined portion of the joined member.

For the joined members thus obtained, the hardness of the surface layer region of the joined portion and the hardness of the base metal were measured as described above, and it was determined whether the hardness of the surface layer region of the joined portion was in the range from 95 % to 115 % of the hardness of the base metal. The hardness of the surface layer region of the joined portion / hardness of the base metal × 100 is also listed in Table 1.

Further, the obtained joined member was evaluated for joint efficiency. In the evaluation of joint efficiency, joint efficiency (= fracture strength of joined portion / fracture strength of base metal × 100) of over 95 % was evaluated as "excellent", joint efficiency of 95 % or less and over 90 % was evaluated as "good", and joint efficiency of 90 % or less was evaluated as "poor". The results are listed in Table 1.

The fracture strength of the joined portion was measured as follows. Test pieces having the same shape as the No. 1 test piece specified in JIS Z 3121 (2013) were collected from the obtained friction stir welded joints so that the joining direction and thickness direction were perpendicular to the longitudinal direction of the test pieces and the joined portion was located centrally in the parallel portion. Next, a tensile test was carried out in accordance with JIS Z 3121 (2013) using the collected test pieces, and a maximum test force (N) was determined. The maximum test force (N) thus determined was divided by the cross-sectional area (mm²) of the parallel portion of the test piece, and the value was taken as the fracture strength of the joined portion.

The fracture strength of the base metal may be referred to as the tensile strength (TS) of the base metal (material to be joined). That is, the fracture strength of the base metal may be measured by carrying out a tensile test in accordance with JIS Z 2241 (2022). For example, a JIS No. 5 test piece is collected from the base metal or the same material as the base metal. Next, a tensile test is carried out using the collected test piece at a crosshead speed of 10 mm/min to measure the tensile strength (TS). When the fracture strength differs depending on the base metal, the maximum fracture strength of each base metal was used in evaluating the joint efficiency.

In order to check the ability to prevent roller scratch occurrence, the joined portion of the joined member was pressed against surface-polished high-carbon high-chromium bearing steel (SUJ-2, hereinafter also referred to as bearing steel) (simulating a roller) and slid 100 times. At this time, the contact pressure (pressure when pressing the joined portion of the joined member against the bearing steel) was set to 400 MPa. Next, the presence or absence of scratches on the bearing steel was visually checked. When scratches were found, the depth of the scratches was measured by cross-section observation with an optical microscope. The ability to prevent roller scratch occurrence was evaluated according to the following criteria. The results are listed in Table 1.

Good: no scratches having a depth of 50 µm or more were observed.

Poor: a scratch having a depth of 50 µm or more was observed.

**Table 1**

| No. | Material to be joined | | Surface working process | | Heating process | | | | Hardness of surface layer region of joined portion / hardness of base metal × 100 | Evaluation result | | Remarks |
|---|---|---|---|---|---|---|---|---|---|---|---|---|
| | Si content | Thickness | Maximum thickness reduction | Joined member thickness reduction ratio | Heating rate | Maximum arrival temperature | Holding time | Cooling rate | | Joint efficiency | Roller scratch occurrence prevention | |
| | mass% | mm | mm | % | °C/s | °C | s | °C/s | % | - | - | |
| 1 | 2.0 | 2.0 | 0.06 | 3.0 | 98 | 720 | 0.3 | 60 | 99 | Excellent | Good | Example |
| 2 | 2.0 | 2.0 | 0.14 | **7.0** | 98 | 720 | 0.3 | 53 | **141** | Poor | Good | Comparative Example |
| 3 | 3.0 | 2.0 | 0.09 | 4.5 | 103 | 750 | 0.2 | 53 | 99 | Excellent | Good | Example |
| 4 | 3.0 | 2.0 | 0.15 | **7.5** | 103 | 750 | 0.2 | 53 | **141** | Poor | Good | Comparative Example |
| 5 | 3.0 | 2.0 | 0.09 | 4.5 | 58 | **350** | 2 | 28 | **120** | Poor | Good | Comparative Example |
| 6 | 5.0 | 2.0 | 0.01 | 0.5 | 60 | 600 | 3 | 20 | 114 | Good | Good | Example |
| 7 | 5.0 | 2.0 | 0.01 | 0.5 | 100 | 800 | 1.5 | 130 | 105 | Excellent | Good | Example |
| 8 | 5.0 | 2.0 | 0.01 | 0.5 | 250 | 950 | 10 | 210 | 98 | Good | Good | Example |
| 9 | 5.0 | 2.0 | 0.11 | **5.5** | 60 | 600 | 3 | 21 | **131** | Poor | Good | Comparative Example |
| 10 | 5.0 | 2.0 | 0.15 | **7.5** | 108 | 600 | 2 | 80 | **150** | Poor | Good | Comparative Example |
| 11 | 5.0 | 2.0 | 0.09 | 4.5 | 201 | **1050** | 3 | 200 | 98 | Poor | Good | Comparative Example |
| 12 | 5.0 | 2.0 | 0.09 | 4.5 | 302 | **350** | 1 | 220 | 113 | Poor | Good | Comparative Example |
| 13 | 12.0 | 2.0 | 0.03 | 1.5 | 200 | 940 | 10 | 130 | 99 | Good | Good | Example |
| 14 | 12.0 | 2.0 | 0.12 | **6.0** | 50 | 580 | 3 | 20 | **131** | Poor | Good | Comparative Example |
| 15 | 4.0 | 2.0 | - | | 107 | 600 | 2 | 84 | **150** | Good | Poor | Comparative Example |
| 16 | 5.0 | 2.0 | 0.08 | 4.0 | - | | | | **131** | Poor | Good | Comparative Example |

As indicated in Table 1, for all of the Examples, excellent joint efficiency was obtained while preventing roller scratch occurrence. On the other hand, for the Comparative Examples, roller scratching occurred or sufficient joint efficiency was not obtained.

Further, when a joined member was produced as described above except that the preliminary surface working process was carried out, then in all cases where the joined member thickness reduction ratio in the surface working process was 5.0 % or less and the maximum arrival temperature in the heating process was 400 °C or higher and 1000 °C or lower, excellent joint efficiency was obtained while preventing roller scratch occurrence.

Further, when various steel sheets having the above-described preferred chemical composition having a Si content of 2.0 mass% to 12.0 mass% and a thickness of 0.2 mm to 3.2 mm were used as the material to be joined, and the joined members were produced by butt joining or lap joining under various joining conditions, then in all cases where the joined member thickness reduction ratio was 5.0 % or less and the maximum arrival temperature in the heating process was 400 °C or higher and 1000 °C or lower, excellent joint efficiency was obtained while preventing roller scratch occurrence.

### REFERENCE SIGNS LIST

- 1: rotating tool (front-side rotating tool)
- 2: rotating tool (back-side rotating tool)
- 3: material to be joined
- 4: joined portion
- 5: grinding device
- 6: heating device

## Claims

1. A friction stir welding method comprising:
a joining process of pressing a rotating tool against material to be joined and joining the material to be joined by moving the rotating tool in a joining direction while rotating the rotating tool, thereby obtaining a joined member;
a subsequent surface working process of carrying out surface working on the joined member; and
a subsequent heating process of heating the joined member, wherein
the material to be joined is steel sheets having a Si content of 2.0 mass% to 12.0 mass%,
a maximum thickness reduction of the joined member in the surface working process is 5.0 % or less of the thickness of the material to be joined, and
a maximum arrival temperature in the heating process is 400 °C or higher and 1000 °C or lower.

2. The friction stir welding method according to claim 1, wherein the surface working is carried out by grinding or pressing.

3. The friction stir welding method according to claim 1, wherein the heating is carried out by induction heating or resistance heating.

4. The friction stir welding method according to claim 2, wherein the heating is carried out by induction heating or resistance heating.

5. The friction stir welding method according to claim 1, wherein, after the heating process, a hardness of a surface layer region of the joined portion of the joined member is in a range from 95 % to 115 % of a hardness of a base metal of the joined member, and
the surface layer region of the joined portion of the joined member is a region from a surface to a 1/10 thickness position of the joined portion of the joined member.

6. The friction stir welding method according to claim 2, wherein, after the heating process, a hardness of a surface layer region of the joined portion of the joined member is in a range from 95 % to 115 % of a hardness of a base metal of the joined member, and
the surface layer region of the joined portion of the joined member is a region from a surface to a 1/10 thickness position of the joined portion of the joined member.

7. The friction stir welding method according to claim 3, wherein, after the heating process, a hardness of a surface layer region of the joined portion of the joined member is in a range from 95 % to 115 % of a hardness of a base metal of the joined member, and
the surface layer region of the joined portion of the joined member is a region from a surface to a 1/10 thickness position of the joined portion of the joined member.

8. The friction stir welding method according to claim 4, wherein, after the heating process, a hardness of a surface layer region of the joined portion of the joined member is in a range from 95 % to 115 % of a hardness of a base metal of the joined member, and
the surface layer region of the joined portion of the joined member is a region from a surface to a 1/10 thickness position of the joined portion of the joined member.

9. The friction stir welding method according to any one of claims 1 to 8, further comprising a preliminary surface working process, prior to the joining process, of removing at least a region up to a depth of 5 µm from a surface of the material to be joined.

10. A friction stir welding device used in the friction stir welding method according to any one of claims 1 to 8, the friction stir welding device comprising:
a joining device configured to join material to be joined to obtain a joined member;
a surface working device configured to carry out surface working on the joined member; and
a heating device configured to heat the joined member,
in the above order in a joining direction.

11. A friction stir welding device used in the friction stir welding method according to claim 9, the friction stir welding device comprising:
a preliminary surface working device configured to carry out preliminary surface working on material to be joined;
a joining device configured to join the material to be joined to obtain a joined member;
a surface working device configured to carry out surface working on the joined member; and
a heating device configured to heat the joined member,
in the above order in a joining direction.

12. A method of producing a joined member, the method comprising joining material to be joined by the friction stir welding method according to any one of claims 1 to 8, to obtain the joined member.

13. A method of producing a joined member, the method comprising joining material to be joined by the friction stir welding method according to claim 9, to obtain the joined member.
